# EUROPÄISCHE PATENTSCHRIFT

(11) **EP 1 767 674 B1**
(45) Veröffentlichungstag und Bekanntmachung des Hinweises auf die Patenterteilung: **06.05.2009**
(21) Anmeldenummer: 06018765.5
(22) Anmeldetag: 07.09.2006
(51) Int. Cl.: C25D 13/24, B01D 15/36, G01N 30/96, C25D 21/16

(54) **Verfahren zum Entfernen von Phosphaten aus Acetat- oder Lactat-gepufferten Lösungen**
Process for removing phosphates from acetate or lactate buffered solutions
Procédé pour éliminer les phosphates de solutions tamponnées par de l'acétate ou du lactate

(30) Priorität: 10.09.2005 DE 102005043031
(43) Veröffentlichungstag der Anmeldung: 28.03.2007
(73) Patentinhaber: Mauer, Dieter, Dr., 51377 Leverkusen (DE)
(72) Erfinder: Mauer, Dieter, Dr., 51377 Leverkusen (DE)

(56) Entgegenhaltungen:
- GB-A- 1 317 075
- JP-A- 57 140 898
- JP-B- 52 017 850
- US-A- 3 591 478
- US-A- 3 663 398
- US-A- 5 609 767

## Beschreibung

Die vorliegende Erfindung betrifft ein Verfahren zum Entfernen von Phosphaten aus Acetat-, Lactat- oder Amidosulfonat-gepufferten KTL-Bad-Lösungen.

Bei der Metalloberflächenvorbehandlung in z.B. der Automobilindustrie und verwandten Branchen wird folgende Behandlungsfolge der Rohblechteile verwendet:
- Entfettung / Reinigung (durch z.B. flüssige K₃PO₄-haltige oder feste Na₃PO₄-haltige Reiniger);
- meist mehrstufige Spüle;
- meist Aktivierung;
- Phosphatierung (oft z.B. Mn/Zn/Ni/Na-H₂PO₄-haltiges Bad (Tri-Kation-Phosphatierung));
- meist mehrstufige Spüle (teilweise mit einer Passivierungsstufe innerhalb der Spülkaskade);
- Kathodische Tauchlackierung (KTL);
- Spülstufe;
- Ofen zur Vernetzung der KTL-Beschichtung.

Die Spülbäder nach der Reinigung und nach der KTL werden heutzutage meist über Ultrafiltrationen behandelt, wobei die Filtrate in die jeweiligen Spülen und die Retentate in die jeweiligen Bäder zurückgeleitet werden. Hierdurch wird eine kontinuierliche Reinigung der Spülbäder bewirkt.

In den vergangenen Jahren wurden im Bewitterungstest Korrosionsprobleme mit den beschichteten Blechen, sowie im mechanischen Beanspruchungstest der Beschichtung Schwächen und Risse festgestellt. In der KTL-zugehörigen Ultrafiltration treten Probleme mit erhöhten Druckverlusten auf. Weiterhin wurden Faltungen und damit Deaktivierungen der Katalysatoren, wie z.B. Wismut oder Zinn, beobachtet. Korrosionsschutzzusätze, wie z.B. Yttrium, werden ausgefällt und damit deaktiviert.

Als eine nach aktuellem Stand der Diskussion gemeinsame Ursache für diese schädlichen Phänomene ist inzwischen eine erhöhte Konzentration von Phosphat in der KTL identifiziert.

Eintragswege für Phosphat sind unterschiedlich, manchmal durch geänderte Gestellführungen verringerbar, aber zumindest im Fall der Einschleppung aus der Phosphatierungsspülkaskade, nicht weit genug verhinderbar.

Insbesondere die Vorkommensweisen des Phosphates (Phosphorsäure oder Ortho-Phosphat, polykondensierte Phosphorsäuren unterschiedlicher Kettenlängen oder gefällte Feststoffe) sind noch nicht ausreichend beschrieben.

Die Badpflegemethode über die Ultrafiltration löst das Problem nicht, da sie keine Ausschleusung von phosphathaltigen Strömen erlaubt. Es ergeben sich Gleichgewichtszustände zwischen kondensierter und monomolekularer Phosphorsäure, die nur geringe Phosphatgehalte im Filtrat messen lassen. Nach allgemeinen chemischen Grundlagen sollten keine Kondensationen unter den Bedingungen im KTL-Bad auftreten; die praktischen Beobachtungen lassen allerdings Anderes vermuten.

In JP 57 140898 A wird die Entfernung von Ionen aus wässrigen Galvanisierungs-Lackierbädern unter Verwendung von schwach basischen Anionenaustausch-Harzen mit sowohl tertiären als auch quartären Ammonium-Gruppen und Kationenaustausch-Harzen in H-Form beschrieben.

US 3,663,398 beschreibt ein Galvanisierverfahren, wobei die Badlösung einer Ultrafiltration unterzogen und das Ultrafiltrat anschließend mit einem Ionenaustausch-Harz vom Carbonsäure-Typ in H-Form in Kontakt gebracht wird.

US 3,591,478 beschreibt die Entfernung von Ionen anorganischer Säuren aus Elektrotauchlackierbädern unter Verwendung von Anionenaustausch-Harzen in OH-Form.

Aufgabe der vorliegenden Erfindung ist allgemein die Entfernung von Phosphaten aus Acetat-, Lactat- oder Amidosulfonat-gepufferten KTL-Bad-Lösungen.

Die Aufgabe wird erfindungsgemäß gelöst durch die Bereitstellung eines Verfahrens, welches durch die folgenden Schritte gekennzeichnet ist:
a) Beladen eines Anionenaustauschers in Acetat-, Lactat- bzw. Amidosulfonat-Form mit KTL-Bad-Lösung,
b) gegebenenfalls Waschen des beladenen Anionenaustauschers,
c) Regenerieren des beladenen Anionenaustauschers mit Acetat-Salz-Lösung bzw. mit Lactat-Satz-Lösung, bzw. mit Amidosulfonat-Salzlösung und
d) gegebenenfalls Waschen des regenerierten Anionenaustauschers.

Die erfindungsgemäße Entfernung der Phosphate aus Acetat-, Lactat- oder Amidosulfonat-gepufferten KTL-Bad-Lösungen erfolgt im Allgemeinen selektiv, d.h. andere Anionen als Phosphat-Ionen verbleiben größtenteils in der besagten Acetat-, Lactat- oder Amidosulfonat-gepufferten KTL-Bad-Lösung.

Bei den Phosphaten, die aus der KTL-Bad-Lösung erfindungsgemäß entfernt werden, handelt es sich insbesondere um H₂PO₄⁻, HPO₄²⁻, PO₄³⁻, Ortho-Phosphate und/oder kondensierte Phosphate, insbesondere niedermolekulare, kondensierte Phosphate (vorzugsweise n < 5000).

Die zu reinigende KTL-Bad-Lösung enthält vorzugsweise zwischen 10 und 500 ppm Phosphat, insbesondere zwischen 50 und 200 ppm Phosphat als Gesamtphosphat.

Zur Analyse von Phosphat stehen zwei Verfahren zur Verfügung:
- ICP (inductively coupled plasma) zur Bestimmung des Gesamt-Phosphor-Gehaltes;
- Photometrie (nach Koagulation der Lackbestandteile) zur Bestimmung von Ortho-Phosphat, also den unkondensierten Anteilen.

Die im Zusammenhang mit der vorliegenden Erfindung genannten Phosphat-Mengenangaben (ppm-Angaben) basieren auf Photometrie-Messungen unter Verwendung von kommerziell erhältlichen Kits (Fa. Hach-Lange, Düsseldorf, Deutschland; Katalog-Nr. LCK349).

Die zu reinigende KTL-Bad-Lösung enthält vorzugsweise zwischen 0,01 und 10 g Anionen organischer Säuren, wie z.B. Acetat oder Lactat, pro 1, insbesondere zwischen 0,05 und 6 g pro 1. Die Konzentration lässt sich durch dem Fachmann bekannte Methoden bestimmen.

Für das erfindungsgemäße Verfahren werden vorzugsweise stark basische Anionenaustauscher in Acetat-, Lactat- bzw. Amidosulfonat-Form verwendet. Besonders bevorzugt handelt sich bei den zu verwendenden Anionenaustauschern um gelförmige Anionenaustauscher vom Typ 1. Es können jedoch auch makroporöse Anionenaustauscher zum Einsatz kommen. Als Typ 1-Anionenaustauscher werden allgemein Anionenaustauscher mit Trimethylamin als funktioneller Gruppe bezeichnet. Beispiele für geeignete Anionenaustauscher sind: Lewatit MonoPlus M 500, Lewatit M 510, M 511.

Das erfindungsgemäße Verfahren kann als Batch-Verfahren oder als Säulenverfahren durchgeführt werden. Vorzugsweise führt man ein Säulenverfahren durch, besonders bevorzugt ein Säulenverfahren im Abstrom.

Das Beladen des Anionenaustauschers erfolgt vorzugsweise mit einer Fließrate von 2 bis 20 Bettvolumen pro Stunde, insbesondere von 3 bis 5 Bettvolumen pro Stunde.

Vorzugsweise wird der Anionenaustauscher zwischen dem Beladen und dem Regenerieren mit Wasser, insbesondere vollentsalztem Wasser, gewaschen und zwar vorzugsweise mit einer Fließrate von 2 bis 20 Bettvolumen pro Stunde, insbesondere von 3 bis 5 Bettvolumen pro Stunde. Besonders bevorzugt misst man die Leitfähigkeit der Produktlösung, vor allem dann, wenn die Produktlösung unter Einfluss des Regeneriermittels zur Koagulation neigt. Es wird vorzugsweise solange gewaschen, bis der Wert der Leitfähigkeit unter 10% des Wertes liegt, der für den Zulauf der Produktlösung gemessen wird. Als Leitfähigkeitsmessung kann eine resistive Messzelle im Ablauf der Säule verwendet werden. Üblicherweise wird diese Maximalleitfähigkeit nach ca. 1 bis 3 Bettvolumen Spülwasser unterschritten.

Für das Regenerieren des Anionenaustauschers wird erfindungsgemäß eine Acetat-Salz-Lösung bzw. eine Lactat-Salz-Lösung bzw. eine Amidosulfonat-Salz-Lösung, vorzugsweise eine Alkalimetall-Acetat- bzw. -Lactat- bzw. -Amidosulfonat-Lösung, verwendet. Besonders bevorzugt enthält die Lösung zwischen 10 und 200 g Acetat, Lactat bzw. Amidosulfonat pro 1, ganz besonders bevorzugt zwischen 100 und 150 g pro 1.

Das Regenerieren des Anionenaustauschers erfolgt vorzugsweise mit einer Fließrate von 2 bis 20 Bettvolumen pro Stunde, insbesondere von 3 bis 5 Bettvolumen pro Stunde.

Gegebenenfalls wird der regenerierte Anionenaustauscher nochmals mit Waschen, insbesondere mit vollentsalztem Wasser, gewaschen, und zwar vorzugsweise mit einer Fließrate von 2 bis 20 Bettvolumen pro Stunde, insbesondere von 3 bis 5 Bettvolumen pro Stunde.

Das erfindungsgemäße Verfahren wird zum Reinigen von KTL-Bädernvorzugsweise in der Automobilindustrie und der allgemeinen Metalloberflächentechnik angewendet.

Im KTL-Bad liegt Phosphat über alle Vorkommensweisen zwischen etwa 50 und 300 ppm vor. Ab Gehalten von mehr als ca. 30 ppm Ortho-Phosphat liegt ein Risikofaktor vor. Als pH-Puffer werden häufig Natriumacetat/Essigsäure oder Lactat/Milchsäure oder Amidosulfonat/Amidosulfonsäure verwendet. Der pH-Wert wird dabei auf ca. 5,2 bis 5,7 eingestellt. Die Aufgabe ist also in dieser bevorzugten Ausführungsform die Reduzierung von Ortho-Phosphat auf Werte ≤ 60 ppm in Anwesenheit von ca. 100 bis 5000 ppm Acetat, Lactat oder Amidosulfonat. Hierzu wird erfindungsgemäß ein Anionenaustauscher in Acetat-, Lactat- bzw. Amidosulfonat-Form verwendet. Hervorzuheben ist hierbei das Positivum des verringerten Dissoziationsgrades der organischen Säure beim o.g. pH-Wert, wodurch der Aktivitätskoeffizient des Säureanions zusätzlich verringert wird.

Das zweite wesentliche Merkmal ist die Einsatzform des Anionenaustauschers. Bei der Inbetriebnahme muss entweder die OH⁻-Form eingesetzt werden, oder die Cl⁻-Lieferform muss durch eine sehr gründliche Regeneration Cl⁻-frei gemacht werden. Danach folgt in beiden Fällen vor dem Einsatz eine Konditionierung in die Acetat-, Lactat- bzw. Amidosulfonat-Form durch entweder eine Essigsäure-, Milchsäure- bzw. Amidosulfonsäure oder eine Natriumacetat-, Natriumlactat- bzw. Natriumamidosulfonatlösung. Beim dann folgenden Betrieb des Verfahrens kann daher kein Cl⁻ oder OH⁻ in den Prozess gelangen.

Das dritte Merkmal ist die Regenerationsmethode. Es wird vorzugsweise eine 1 bis 1,5 molare Natriumacetat-, Natriumlactat- bzw. Natriumamidosulfonatlösung verwendet. Bei dem hier vorliegenden pH-Wert von ca. 8 liegt der Dissoziationsgrad bei 1 und das jetzt deutliche Übermaß an Acetat-, Lactat- bzw. Amidosulfonatanionen bewirkt eine gute Regeneration der Phosphate vom Anionenaustauscher.

Ebenso wichtig ist die Vermeidung des Kontaktes von KTL-Bad und Regeneriermittel, da die Letztere einen Eigen-pH-Wert von bis ca. 8 hat und damit die KTL-Bindemittel koagulieren würde. Hierzu müssen effektive Waschphasen eingeschoben werden und die Anlagen extrem totraumarm gebaut werden.

Im Folgenden wird die vorliegende Erfindung anhand eines Beispiels näher beschrieben.

### Beispiel:

Nach Vorversuchen im Labor wurde ein stark basischer Anionenaustauscher im Betriebsversuch eingesetzt. Aufgrund der niedrigen Phosphatkonzentration (im Vergleich zum als Konkurrenz reichlich vorhandenen Acetat) ergaben sich nur relativ niedrige Kapazitäten von ca. 0,6 g/l Harz, aber trotzdem ausreichend lange Laufzeiten von ca. 20 bis 40 BV (Bettvolumen).

Die Eintragsrate für Phosphat liegt bei ca. 1 bis 4 g/h im Becken von 50 m³. Als mittlerer Eintrag wurde 2,5 g/h angenommen.

Die Versuchsanlage bestand aus einem Anbindungs- und Regelmodul mit Pumpe und einem Säulenmodul mit zwei transparenten Säulen mit je 100 1 Gesamtvolurnen. Insgesamt wurden je Säule 88 1 Anionenaustauscher in Lieferform (Cl⁻) eingefüllt und über 3 BV 4 %ige NaOH und 1,5 BV ln-Essigsäure in die Acetat-Form konditioniert.

Das Regeneriermittel wurde aus einem Konzentratbehälter (1 m³ Container) in einem Verdünnungstank auf die Gebrauchskonzentration verdünnt.

Zur Fraktionierung wurde ein 120 1 Fass mit Standmessung verwendet (max. 1,3 BV Volumen).

Zur Verifizierung des im Labor erhaltenen Durchbruchsprofils und insbesondere der daraus abgeleiteten Entfernungsleistung wurden einige Regenerate beprobt und verglichen. Es zeigt sich eine PO₄-Entfernungsleistung, die mit 6 bis 10 g/h gut dem errechneten Wert entspricht.

Aus dem Vergleich der gemessenen PO₄-Konzentrationsverläufe, der Regeneratkonzentrationen am Anfang und den Simulationsergebnissen kann der Schluss gezogen werden, dass die IA-Anlage bei einer Zulaufkonzentration um 60 ppm tatsächlich um ca. 9 g/h entfernen kann und nach einer Zeit von ca. 1000 h (ca. 40 Tage) bei einer Gleichgewichtskonzentration um 20 ppm endet.

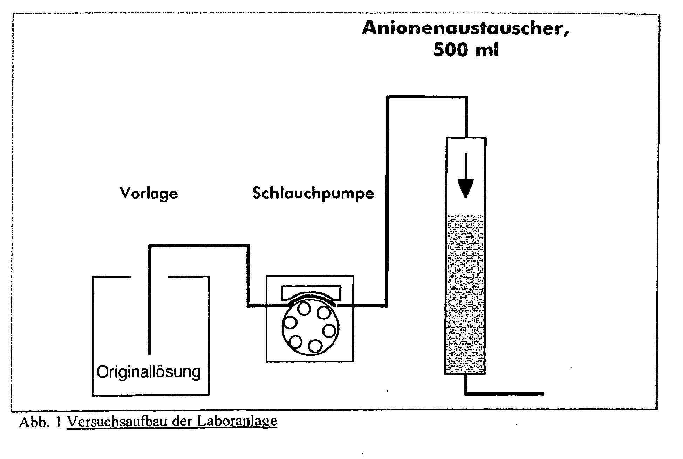

## Patentansprüche

1. Verfahren zum Entfernen von Phosphaten aus Acetat-, Lactat- oder Amidosulfonat-gepufferten Lösungen für Kathodische Tauchlackierungsbäder im weiteren bezeichnet als KTL-Bad-Lösungen, **gekennzeichnet durch** die folgenden Schritte:
a) Beladen eines Anionenaustauschers in Acetat-, Lactat- bzw. Amidosulfonat-Form mit KTL-Bad-Lösung, und
b) Regenerieren des beladenen Anionenaustauschers mit Acetat-Salz-Lösung, mit Lactat-Salz-Lösung bzw. mit Amidosulfonat-Salz-Lösung.

2. Verfahren gemäß Anspruch 1, **dadurch gekennzeichnet, dass** der beladene Anionenaustauscher vor dem Regenerieren gewaschen wird.

3. Verfahren gemäß Anspruch 1 oder 2, **dadurch gekennzeichnet, dass** der regenerierte Anionenaustauscher gewaschen wird.

4. Verfahren gemäß einem der Ansprüche 1 bis 3, **dadurch gekennzeichnet, dass** die KTL-Bad-Lösung zwischen 5 und 500 ppm o-Phosphat enthält.

5. Verfahren gemäß einem der Ansprüche 1 bis 4, **dadurch gekennzeichnet, dass** die KTL-Bad-Lösung zwischen 0,01 und 10 g Acetat, Lactat bzw. Amidosulfonat pro 1 enthält.

6. Verfahren gemäß einem der Ansprüche 1 bis 5, **dadurch gekennzeichnet, dass** es sich bei dem Anionenaustauscher um einen stark basischen Anionenaustauscher handelt.

7. Verfahren gemäß Anspruch 6, **dadurch gekennzeichnet, dass** es sich um einen gelförmigen Anionenaustauscher vom Typ 1 handelt.

8. Verfahren gemäß einem der Ansprüche 1 bis 7, **dadurch gekennzeichnet, dass** es sich um ein Säulenverfahren handelt.

9. Verfahren gemäß einem der Ansprüche 1 bis 8, **dadurch gekennzeichnet, dass** es sich bei der Acetat-Salz-Lösung um eine Alkalimetall-Acetat-Lösung bzw. bei der Lactat-Salz-Lösung um eine Alkalimetall-Lactat-Lösung bzw. bei der Amidosulfonat-Salz-Lösung um eine Alkali-Amidosulfonat-Lösung handelt.

10. Verfahren gemäß Anspruch 9, **dadurch gekennzeichnet, dass** die Salzlösung zwischen 10 und 200 g Acetat, Lactat bzw. Amidosulfonat pro 1 enthält.

## Claims

1. Method of removing phosphates from acetate-, lactate- or amidosulphonate-buffered solutions for cathodic electrodeposition baths, referred to hereinbelow as cathodic electrodeposition bath solutions, **characterized by** the following steps:
a) loading an anion exchanger in acetate, lactate or amidosulphonate form with cathodic electrodeposition bath solution, and
b) regenerating the loaded anion exchanger with acetate salt solution, with lactate salt solution or with amidosulphonate salt solution.

2. Method according to Claim 1, **characterized in that** the loaded anion exchanger is washed before it is regenerated.

3. Method according to Claim 1 or 2, **characterized in that** the regenerated anion exchanger is washed.

4. Method according to any of Claims 1 to 3, **characterized in that** the cathodic electrodeposition bath solution contains between 5 and 500 ppm of orthophosphate.

5. Method according to one of Claims 1 to 4, **characterized in that** the cathodic electrodeposition bath solution contains between 0.01 and 10 g of acetate, lactate or amidosulphonate per 1.

6. Method according to any of Claims 1 to 5, **characterized in that** the anion exchanger is a strongly basic anion exchanger.

7. Method according to Claim 6, **characterized in that** the exchanger is a type-1 anion exchanger in gel form.

8. Method according to any of Claims 1 to 7, **characterized in that** it is a column method.

9. Method according to any of Claims 1 to 8, **characterized in that** the acetate salt solution is an alkali metal acetate solution or the lactate salt solution is an alkali metal lactate solution or the amidosulphonate salt solution is an alkali amidosulphonate solution.

10. Method according to Claim 9, **characterized in that** the salt solution contains between 10 and 200 g of acetate, lactate or amidosulphonate per 1.

## Revendications

1. Procédé d'élimination de phosphates de solutions tamponnées à l'acétate, au lactate ou à l'amidosulfonate pour des bains de peinture par immersion cathodique, appelées ci-après solutions de bain KTL, **caractérisé par** les étapes suivantes consistant à :
a) charger un échangeur d'anions sous forme d'acétate, de lactate ou d'amidosulfonate avec une solution de bain KTL, et
b) régénérer l'échangeur d'anions chargé avec une solution de sel d'acétate, avec une solution de sel de lactate ou avec une solution de sel d'amidosulfonate.

2. Procédé selon la revendication 1, **caractérisé en ce que** l'échangeur d'anions chargé est lavé avant la régénération.

3. Procédé selon la revendication 1 ou 2, **caractérisé en ce que** l'échangeur d'anions régénéré est lavé.

4. Procédé selon l'une quelconque des revendications 1 à 3, **caractérisé en ce que** la solution de bain KTL contient entre 5 et 500 ppm d'o-phosphate.

5. Procédé selon l'une quelconque des revendications 1 à 4, **caractérisé en ce que** la solution de bain KTL contient entre 0,01 et 10 g d'acétate, de lactate ou d'amidosulfonate pour 1.

6. Procédé selon l'une quelconque des revendications 1 à 5, **caractérisé en ce que** l'échangeur d'anions est un échangeur d'anions fortement basique.

7. Procédé selon la revendication 6, **caractérisé en ce qu'**il s'agit d'un échangeur d'anions sous forme de gel du type 1.

8. Procédé selon l'une quelconque des revendications 1 à 7, **caractérisé en ce qu'**il s'agit d'un procédé à colonnes.

9. Procédé selon l'une quelconque des revendications 1 à 8, **caractérisé en ce que** la solution de sel d'acétate est une solution d'acétate de métal alcalin ou la solution de sel de lactate est une solution de lactate de métal alcalin ou la solution de sel d'amidosulfonate est une solution d'amidosulfonate alcalin.

10. Procédé selon la revendication 9, **caractérisé en ce que** la solution de sel contient entre 10 et 200 g d'acétate, de lactate ou d'amidosulfonate pour 1.
